Europäisches Patentamt

European Patent Office

Office européen des brevets

(11) Veröffentlichungsnummer: **0 281 760**
**A2**

(12) **EUROPÄISCHE PATENTANMELDUNG**

(21) Anmeldenummer: 88101552.3

(51) Int. Cl.⁴: **B23B 31/04**

(22) Anmeldetag: 03.02.88

(30) Priorität: 11.03.87 DE 3707836
11.05.87 DE 3715659

(43) Veröffentlichungstag der Anmeldung:
14.09.88 Patentblatt 88/37

(84) Benannte Vertragsstaaten:
CH DE ES FR GB IT LI

(71) Anmelder: **Firma Gottlieb Gühring**
**Herderstrasse 50-54**
**D-7470 Albstadt 1-Ebingen(DE)**

(72) Erfinder: **Reinauer, Josef**
**Weidenweg 23**
**D-7480 Sigmaringen(DE)**

(74) Vertreter: **Winter, Konrad Theodor, Dipl.-Ing.**
**et al**
**Patentanwaltsbüro Tiedtke- Bühling- Kinne-**
**Grupe- Pellmann- Grams- Struif- Winter-**
**Roth Bavariaring 4**
**D-8000 München 2(DE)**

(54) **Kupplungssystem für spanabhebende Schaftwerkzeuge.**

(57) Beschrieben wird ein Kupplungssssytem für spanabhenbende Schaftwerkzeuge, mit dem eine in Dreh-und Axialrichtung feste Verbindung zwischen koaxialen Teilen des Schaftwerkzeugs herstellbar ist. Das Kupplungssystem weist eine in einem ersten Teil ausgebildete Aufnahme für einem am anzuschließenden zweiten Teil vorgesehene Zentrierfortsatz, eine Mitnehmereinrichtung und eine von außen mittels einer Stelleinrichtung betätigbare Spanneinrichtung auf, mit der die bieden Teile über eine Stützringflächenpaarung gegeneinander preßbar sind. Die Spanneinrichtung weist eine pendelnd im ersten Teil achsmittig gelagerte Zugstange auf, die sich in eine koaxiale Ausnehmung des zweiten Teils erstreckt und dort einen Konusabschnitt ausbildet, über den die Zugstange mittels der sich am zweiten Teil abstützenden Stelleinrichtung unter Zug setzbar ist. Hierdurch wird ein reiner Axialzug erzeugt, der über eine große, ringförmige Planabstützung querkraftfrei in die zu koppelnden Schaftteile einleitbar ist.

FIG.1

## Kupplungssystem für spanabhebende Schaftwerkzeuge

Die Erfindung bezieht sich auf ein Kupplungssystem für spanabhebende Schaftwerkzeuge, gemäß dem Oberbegriff des Patentanspruchs 1.

Die technische Entwicklung auf dem Gebiet der spanabhebenden Schaftwerkzeuge geht im Zuge der immer höher werdenden Schnittgeschwindigkeiten und des Einsatzes programmgesteuerter Werkzeugmaschinen hin zu modularaufgebauten Werkzeugsystemen, bei denen beispielsweise an einen mit hoher Präzision hergestellten und damit sehr teuren Spannschaft einer Werkzeugaufnahme ein System verschiedener Werkzeuge angekoppelt wird, die durch eine automatisch arbeitende Werkzeugwechseleinrichtung auswechselbar sein müssen.

Diese Entwicklung erfordert ein speziell abgestimmtes Kupplungssystem, mit dem es gelingt, die Kraftübertragung von der Werkzeugaufnahme bzw. vom Spannschaft zum Werkzeug, die Rundlaufgenauigkeit und die Anpassung der Lage der Werkzeugschneiden zum Schaft bzw. zur Aufnahme für das gesamte Spektrum der anzukoppelnden Werkzeuge mit ausreichender Qualität sicherzustellen.

In diesem Zusammenhang sind bereits eine Reihe derartiger Kupplungssysteme vorgeschlagen worden, die jedoch den vorstehend aufgezeigten Anforderungen jeweils nur zum Teil gerecht werden.

So ist beispielsweise in einem Fall vorgeschlagen worden, die Kupplung über eine selbstzentrierende Hirth-Verzahnung herzustellen, die zusammen mit einer Spannzange für eine formschlüssige Kupplung der aneinander anzuschließenden Teile sorgt. Dieser bezüglich der Herstellung aufwendige Lösungsvorschlag ist bedingt durch das verwendete Spannsystem auf die Kupplungsstelle zur Grundaufnahme beschränkt. Wenn weitere Kupplungsstellen im Schaftbereich des Werkzeugs vorgesehen werden müssen, beispielsweise für den Falle daß mit Verlängerungen oder Reduzierungen gearbeitet werden muß, werden abweichende Kupplungen benötigt. Ein automatischer Werkzeugwechsel wird auf diese Weise erschwert.

Ein weiterer Lösungsvorschlag besteht darin, daß die Kupplung aneinander angrenzender Schaftteile des Werkzeugs über eine zentrische Gewindeverbindung erfolgt. Es hat sich gezeigt, daß diese Kopplungstechnik den Einsatz von automatischen Werkzeugwechselsystemen erschwert, da zum Lösen der Kupplung ein frontaler Zugriff zu den Schaftteilen erforderlich ist, um die Verbindung - schnell lösen zu können. Darüberhinaus hat sich als nachteilig erwiesen, daß das Ankoppeln von Werkzeugen mit reduziertem Schaftdurchmesser nur dadurch möglich ist, daß gleichzeitig der Abstand der Werkzeugschneide von der Grundaufnahme verhältnismäßig stark vergrößert wird, was sich nachteilig auf die Präzision des Bearbeitungsvorgangs auswirken kann.

Schließlich ist zur Vereinfachung des automatischen Lösens der Kupplung zwischen verschiedenen Schaftteilen eine Lösung vorgeschlagen worden, bei der ein zylindrischer Zentrierfortsatz eines Schaftteils in eine Aufnahmebohrung des angrenzenden Schaftteils gesteckt wird. Die Außenfläche des Zentrierzylinders weist zwei diametral versetzte Ausnehmungen auf, die gegensinnig hinterschnitten sind, so daß beim Eindrehen entsprechender Positionierungsschrauben eine unverrückbare Verspannung des eingesetzten Schaftteils relativ zum Aufnahmeteil erfolgen kann. Die Mitnahme erfolgt über einen Dorn, der in einen axialen Schlitz im Zentrierzylinder eingreift. Dieses Kupplungssystem kann zwar an beliebigen Stellen des Schaftwerkzeuges eingesetzt werden. Es setzt jedoch eine axiale Lagefixierung der miteinander zu koppelnden Schaftabschnitte beim Anziehvorgang der Befestigungsschrauben voraus, wodurch der Einsatz automatischer Werkzeugwechselsysteme erschwert wird, zumal zwei Spannschrauben betätigt werden müssen.

Ferner ist ein Kupplungssystem für ein modularaufgebautes Werkzeugsystem gemäß dem Oberbegriff des Patentanspruchs 1 vorgeschlagen worden, bei dem mit einer einzigen, seitlich von außen betätigbaren Stellschraube die zu koppelnden Teile in fester Relativlage zueinander zu fixieren. Hierzu ist im Zentrierfortsatz ein Befestigungsbolzen vorgesehen, der gleitend verschiebbar in einer diametral ausgerichteten Führungsbohrung aufgenommen ist. Eine Stirnfläche des Befestigungsbolzens weist eine konische Ausnehmung auf, wohingegen die andere Endfläche des Befestigungsbolzens eine konische Außenfläche hat. Über eine als Kegelschraube ausgebildete Stelleinrichtung, deren Kegel an die Innenausnehmung des Befestigungsbolzens angepaßt ist, erfolgt eine Verschiebung des Befestigungsbolzens in der Diametral-Bohrung, so daß sich die kegelige Außenfläche an einer konischen Ausnehmung einer Stützschraube abstützen kann, die von der anderen Seite des ersten Befestigungsteils einschraubbar ist. Die Achse des Befestigungsbolzens ist dabei zur Achse der Kegelschraube und der Stützschraube versetzt, so daß beim Eindrehen der Kegelschraube eine Axialkraft auf den Zentrierfortsatz übertragen werden kann, so daß die zu koppelnden Teile über eine Stützringflächenpaarung gegeneinander gespannt werden können. Zur Erreichung der Positionierung und einer Kopplung der beiden Teile in Umfangsrichtung dient ein Indexierstift, der im Bereich der Stützringflächen vorgesehen ist.

Abgesehen davon, daß bei diesem Lösungsvorschlag eine symmetrische Anpreßkraftverteilung nur dann erreichbar ist, wenn eine genaue Lagezuordnung der Stützflächen auf seiten der Stützmutter und der konischen Ausnehmung im Befestigungsbolzen vorliegt und darüberhinaus eine genaue Fluchtung der durch die jeweiligen Achsen des Befestigungsbolzens und der Stützschraube, sowie der Kegelschraube gehenden Axialebenen des Schaftwerkzeugs vorliegt, können sich Nachteile dahingehend ergeben, daß beim Einsatz bestimmter Werkzeuge umlaufende Werkzeugschwingungen auftreten, denen durch die vorliegenden Orientierung und Lage der Stützflächen nur bedingt entgegengewirkt werden kann. Darüberhinaus wird bei diesem Lösungsvorschlag dann, wenn der Zentrierfortsatz an dem der Werkzeugschneide näheren Teil ausgebildet ist, das Werkzeugsystem grundsätzlich teurer. Um diesen Problem entgegenzuwirken, wurde vorgeschlagen, das Kupplungssystem durch einen Spindelvorsatzflansch zu ergänzen, an dem dann der Zentrierfortsatz zur Aufnahme des Befestigungsbolzens angebracht ist. Diese Variante kann jedoch insbesondere bei thermisch hoch beanspruchten Schaftwerkzeugen dazu führen, daß beim Auswechseln des Werkzeugs, d. h. beim Ansetzen eines neuen Werkzeugs, das noch nicht die erhöhte Betriebstemperatur des Zentrierfortsatzes hat, Passungsprobleme auftreten, wodurch Stillstandzeiten in Kauf genommen werden müssen.

Der Erfindung liegt die Aufgabe zugrunde, ein Kupplungssystem gemäß dem Oberbegriff des Patentanspruchs 1 zu schaffen, das sich bei leichter Bedienbarkeit durch eine verbesserte Kraftübertragung von der Werkzeugaufnahme zum Werkzeug, eine hohe Rundlaufgenauigkeit und durch eine große Flexibilität hinsichtlich der zu koppelnden Werkzeugteile auszeichnet.

Diese Aufgabe wird durch die im kennzeichnenden Teil des Patentanspruchs 1 angegebenen Merkmale gelöst.

Erfindungsgemäß erfolgt aufgrund der pendelnd gelagerten Zugstange eine querkraftfreie Einleitung der axialen Zugkraft, und zwar selbst dann, wenn eine toleranzbedingte Exzentrizität der Stützflächen für die Zugstange vorliegen sollte. Es ergibt sich auf diese Weise eine rotationssymmetrische Krafteinleitung in die Stützringflächenpaarung. Es wird somit eine Verbindung geschaffen, bei der sich vom Aufbau her die Möglichkeit eröffnet, das Biegewiderstandsmoment in allen Axialebenen gleich groß zu halten. Hierdurch werden Biegeschwingungen selbst dann verhindert, wenn extrem große Kräfte auf das Werkzeug einwirken. Dabei kann nach wie vor eine von außen zugängliche Stelleinrichtung verwendet werden, die den Einsatz automatischer Werkzeugwechselsysteme erleichtert und dabei hinsichtlich der Lösbarkeit von auftretenden Zerspanungskräften unbeeinflußt bleibt. Die Gestaltung schafft weiter die Voraussetzung dafür, daß der Zentrierfortsatz an demjenigen Teil ausgebildet werden kann, der der Werkzeugschneide näher liegt. Hierdurch wird das Werkzeugsystem kostengünstiger herstellbar und es können darüberhinaus die oben beschriebenen Passungsprobleme beim Werkzeugwechsel, d.h. beim Einsetzen eines Werkzeugteils, das die Betriebstemperatur der angrenzenden Teile noch nicht erreicht hat, weitgehend ausgeschaltet werden. Dabei sorgt die achsmittig gelagerte Zugstange dafür, daß der gesamte um die Zugstange herum liegende Bauraum für die Gestaltung der Mitnehmereinrichtung herangezogen werden kann. Auf diese Weise ergibt sich eine sehr große Flexibilität hinsichtlich der Gestaltung und Anpassung der Mitnehmereinrichtung an die verschiedensten Teile eines Werkzeugsystems.

Vorteilhafte Weiterbildungen sind Gegenstand der Unteransprüche.

Durch die Ausbildung der Stelleinrichtung gemäß Patentanspruch 2 ergibt sich eine sehr einfache und schnelle Bedienbarkeit. Eine derartige Stelleinrichtung ist problemlos von automatischen Werkzeugwechselsystemen betätigbar, so daß sich das anmeldungsgemäße Kupplungssystem in ein Fertigungssystem mit Roboter-Werkzeugwechsel problemlos integrieren läßt.

Wenn die Zugstange gemäß Patentanspruch 3 von der Stellschraube gegen zwei weitere Stützkörper gepreßt wird, erfolgt auf sehr einfache Weise eine Zentrierung des Konusabschnitts. In der Ausgestaltung gemäß Patentanspruch 4 ergibt sich darüberhinaus der zusätzliche Vorteil, daß über die beiden einstellbaren Schrauben eine Korrektur von Fertigungsungenauigkeiten möglich wird.

Es hat sich gezeigt, daß mit der Weiterbildung gemäß Patentanspruch 5, d. h. der Abstützung der Zugstange an drei über den Umfang gleichmäßig verteilten Stellen das Biegewiderstandsmoment in den verschiedenen Axialebenen ausreichend homogen gehalten werden kann, um selbst bei größten auftretenden Werkzeugkräften Schwingungsproblemen bzw. Abweichungen der Schneide von der Sollage entgegenzuwirken. Dabei geht man bevorzugterweise so vor, daß die Stützschrauben beim Herstellungsvorgang ein Mal eingestellt und in dieser Lage versiegelt werden.

Mit der Weiterbildung gemäß Patentanspruch 7 wird die Halterung der pendelnd gelagerten Zugstange in vorteilhafter Weise mit der Mitnehmereinrichtung gekoppelt. Dabei ergibt sich zusätzlich zur Torssionssicherung ein Indexierung der miteinander zu koppelnden Teile, wobei nach wie vor eine ringförmig geschlossene Planabstützung der gegeneinander zu pressenden Teile aufrechterhalten bleibt. Die Integration der Ausnehmungen in den Zentrierfortsatz spart Raum, beeinträchtigt dabei jedoch nicht die Qualität der Zentrierung. Ein zusätzlicher Vorteil der Weiterbildung gemäß Patentanspruch 7 ist darin zu sehen, daß durch sie die Möglichkeit eröffnet wird, Schaftteile unterschiedlichen Durchmessers so aneinander anzukoppeln, daß dabei so wenig wie möglich axialer Bauraum verloren geht. Dies geschieht in vorteilhafter Weise dadurch, daß für eine Durchmesserreduzierung der Mitnehmerring und die Zugstange in axialer Richtung verlängert und ein Zwischenring zwischen die Stützringflächen der zu koppelnden Teile eingesetzt wird. Auf diese Weise kann eine Durchmesserreduzierung von einer Größe auf verschiedene, darunterliegende Größen, auch in einem Mehrfachsprung, im Bereich einer einzigen Kupplung erfolgen.

Die Weiterbildung gemäß Patentanspruch 10 läßt eine ge zielte Winkeleinstellung zwischen den miteinander zu koppelnden Teilen und damit eine Mehrfach-Indexierung des Werkzeugs zu, so daß sich das erfindungsgemäße Kupplungssystem auch für feststehende Werkzeuge, beispielsweise für ein Dreh-oder Bohrwerk, eignet.

Durch die Befestigung des Mitnehmerrings gemäß Patentanspruch 11 ergibt sich eine gleichmäßige und satte Anlage des Mitnehmerrings im Grund der Aufnahme, wodurch die Passung zwischen Klauenfortsatz und Ausnehmung im Zentrierfortsatz exakter herstellbar ist.

Mit der Weiterbildung gemäß Patentanspruch 12 ergibt sich die Möglichkeit, die Werkzeugschneide relativ zum Schaft in Winkelstufen von 30° zu indexieren. Hierdurch ergibt sich letztlich eine erhöhte Flexibilität hinsichtlich der Anwendung des Kupplungssystems.

Mit der Weiterbildung gemäß Patentanspruch 13 gelingt es, eine formschlüssige Mitnahme des Mitnehmerringes mit herstellungstechnisch einfacheren Mitteln bereitzustellen. Im Gegensatz zur vorstehend beschriebenen Ausführungsform gemäß Patentanspruch 10 bis 12 kann die Fertigung des Mitnehmerrings vereinfacht werden, da sich die Teilung der für die Befestigungsschrauben vorgesehenen Gewindebohrungen in der Aufnahme nicht mehr nachteilig auf die Erzeugung einer gleichmäßigen Anpreßkraft für den Mitnehmerring auswirken kann. Durch die räumliche Trennung der Funktionsflächen für die Mitnahme in Umfangsrichtung einerseits und die Axialkraft andererseits wird darüberhinaus die Möglichkeit eröffnet, die jeweiligen Funktionsflächen ohne die Notwendigkeit eines Kompromisses zu optimieren.

Die Weiterbildung gemäß Patentanspruch 15 ist in herstel lungstechnischer Hinsicht von Vorteil, da auf diese Weise die Vertiefung in der Aufnahme leicht herstellbar ist.

Die Weiterbildung gemäß Patentanspruch 16 und/oder 17 ergibt wiederum die Möglichkeit, die Werkzeugschneide relativ zum Schaft in Winkelstufen von 30° zu indexieren, wodurch die Verwendungsmöglichkeiten des Kupplungssystems erweitert werden.

Eine mögliche Alternative zur axialen Fixierung des Mitnehmerrings ist Gegenstand des Patentanspruchs 18. Gemäß dieser Weiterbildung muß lediglich eine Flanke der V-förmigen Ringnut hinsichtlich der Lage an die Gestaltung der Konusfläche der Befestigungsschrauben angepaßt werden. Der Mitnehmerring wird durch die Befestigungsschrauben flächig mit seiner sich an den Mitnahmefortsatz anschließenden Radialschulter gegen den Grund der Aufnahme gepreßt.

Alternativ hierzu kann gemäß Patentanspruch 19 ein geteilter Haltering Anwendung finden, der in einer Ringnut des Mitnehmerrings mit Passung aufgenommen und zur Lagesicherung in axialer Richtung radial nach außen in einen entsprechenden Einstich in der Aufnahme spreizbar ist.

Die Weiterbildung gemäß Patentanspruch 20 führt zu besonders einfachen geometrischen Funktionsflächen an den jeweiligen Bauteilen, wobei sich gezeigt hat, daß für eine ausreichende Positionierung in axialer Richtung eine planparallele Gestaltung der stirnseitigen Paßflächen genügt. Um zusätzlich beim Aufspreizen der Halteringsegmente eine axiale Verspannung des Mitnehmerrings gegen eine Radialfläche im Grund der Aufnahme zu erzeugen, kann es von Vorteil sein, die der Schulter der Rechtecknut abgewandte Stirnseite konisch auszubilden und die Stufenfläche im Einstich an diese Gestaltung anzupassen, so daß mit zunehmendem Aufspreizen der Halteringsegmente eine größer werdende Axialkraft erzeugt wird.

Eine besonders einfache Lösung zur Erzeugung des Aufspreizeffekts ist Gegenstand des Patentanspruchs 21. Vorzugsweise sind zwei Halteringsegmente vorgesehen, die mittels zweier, diametral gegeneinander versetzter Spreizschrauben spreizbar sind.

Durch die Weiterbildung gemäß Patentanspruch 22 ist dafür Sorge getragen, daß beim Herausdrehen der Spreizschrauben eine Rückkehr der Halteringsegmente in die Nut des Mitnehmerrings erfolgt, so daß letzterer problemlos aus der Aufnahme herausgenommen werden kann.

Mit der Weiterbildung gemäß Patentanspruch 24 läßt sich eine sehr platzsparende Durchmesserveränderung im Bereich der Kupplungsflächen erreichen.

Ein weiterer Vorteil des erfindungsgemäßen Kupplungssystems besteht darin, daß es problemlos auch für diejenigen Schaftwerkzeuge, beispielsweise Bohrwerkzeuge, anwendbar ist, bei denen eine zentrale Kühlmittelversorgung durch den Schaft vorgesehen ist. In diesem Fall wird die Zugstange gemäß Patentanspruch 27 mit einer durchgehenden, vorzugsweise zentralen Innenausnehmung versehen.

Gegenstand der Patentansprüche 28 bis 34 sind Weiterbildungen des Kupplungssystems, mit denen ein gesamtes Werkzeugsystem eines NC-Bearbeitungszentrums, einer Bohr-und/oder einer Fräsmaschine zusammensetzbar ist.

Nachstehend werden anhand schematischer Zeichnungen mehrere Ausführungsbeispiele der Erfindung näher erläutert.

Es zeigen:

Figur 1 eine Schnittansicht einer ersten Ausführungsform des Kupplungssystems bei einer Schnittführung gemäß I-I in Figur 2,

Figur 2 eine Schnittansicht gemäß II-II in Figur 1,

Figur 3 eine Schnittansicht gemäß III-III in Figur 1,

Figur 4 eine teilweise im Schnitt gezeigte Seitenansicht einer Grundaufnahme für ein Werkzeugsystem, das mit dem Kupplungssystem gemäß Figur 1 bis 3 ausgestattet ist,

Figur 5 eine teilweise im Schnitt gezeigte Seitenansicht einer Schaftverlängerung, die mit dem Kupplungssystem ausgestattet ist,

Figur 6 eine Seitenansicht eines Spiralbohrerteils, das auf der einem Werkzeugeinsatz abgewandten Seite mit einem Anschluß für das Kupplungssystem versehen ist,

Figur 7 in einer der Figur 1 ähnlichen Ansicht einen Schnitt durch eine abgewandelte Ausführung des Kupplungssystems zur Herstellung einer Durchmesserreduzierung,

Figuren 8 und 9 teilweise im Schnitt gezeigte Seitenansichten von Adaptern die an das Kupplungssystem angepaßt sind,

Figur 10 eine Schnittansicht eines weiteren Werkzeugsystemteils, das an das Kupplungssystem ange paßt ist,

Figur 11 eine Teilschnittansicht einer weiteren Ausführungsform des Kupplungssystems, wobei lediglich eine Hälfte dieses Systems dargestellt ist,

Figur 12 eine Ansicht der Aufnahme des Ausführungsbeispiels gemäß Figur 11 bei einer Schnittführung entlang XII-XII in Figur 11,

Figur 13 eine der Figur 11 ähnliche Ansicht einer weiteren Ausführungsform des Kupplungssystems, und

Figur 14 eine Ansicht des Kupplungssystems gemäß Figur 13 bei einer Schnittführung entlang XIV-XIV in Figur 13.

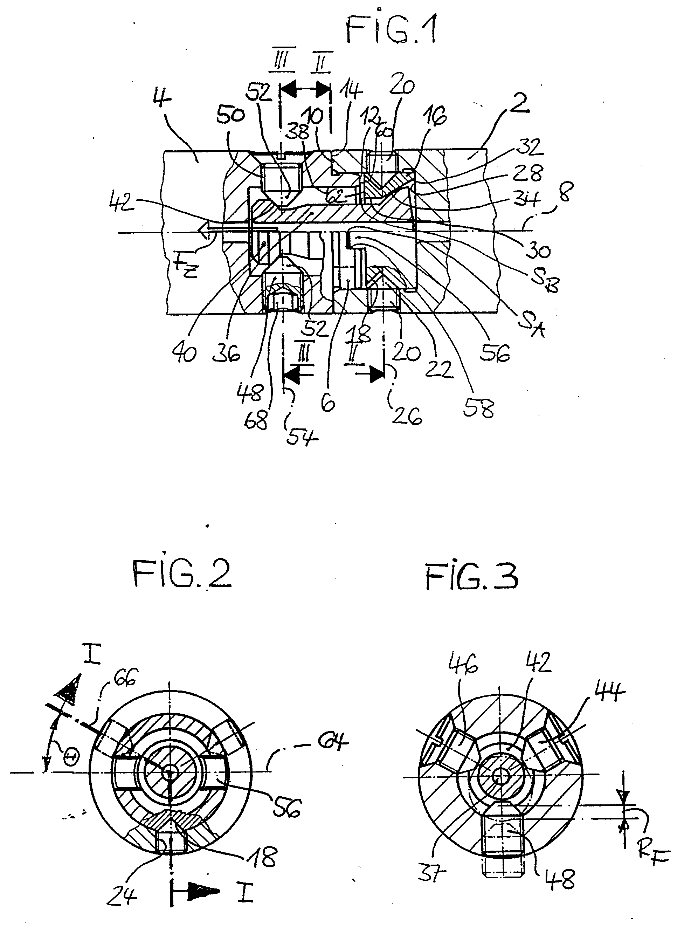

In Figur 1 ist mit dem Bezugszeichen 2 ein erstes Teil und mit dem Bezugszeichen 4 ein zweites Teil einer lösbaren Kupplung zwischen koaxialen Schaftteilen eines spanabhebenden Werkzeugs, wie z. B. eines Bohrers, Fräsers oder Drehmeisels, bezeichnet. Diese Kupplung kann an verschiedenen Stellen zwischen der Werkzeugaufnahme der Werkzeugmaschine und einer nicht dargestellten Schneide liegen. Als erstes Teil wird jedoch grundsätzlich immer dasjenige Schaftteil bezeichnet das von der Schneide weiter entfernt liegt, als das zweite Teil.

Zur Herstellung einer in axialer Richtung und in Umfangsrichtung festen Verbindung zwischen den Schaftteilen 2 und 4, die selbst bei sehr großen über die Werkzeugschneiden eingebrachten Torsions-und Biegemomenten für eine hohe Werkzeug-bzw. Schaftstabilität sorgt, ist eine nachfolgend näher zu beschreibende Zentriereinrichtung, eine Mitnehmereinrichtung und eine Spanneinrichtung vorgesehen, mit der die Kupplung in kurzer Zeit lösbar bzw. schließbar ist.

Zur Zentrierung weist das zweite Teil einen zentrierfortsatz 6 auf, der mit größtmöglicher Präzision bezüglich der Schaftachse 8 und im Planschlag zu einer ringförmig umlaufenden Stützfläche 10 gefertigt ist. Der Zentrierfortsatz 6 steht in Passungseingriff mit einer zylindrischen Ausnehmung 12 im ersten Teil 2. Bezüglich der Herstellungsgenauigkeit dieser zylindrischen Ausnehmung 12 gilt analog das im Zusammenhang mit dem Zentrierfortsatz 6 Gesagte. Im Planschlag zur zylindrischen Ausnehmung 12 weist das erste Teil 2 eine der Stützfläche 10 zugeordnete, ebenfalls ringförmige Stützfläche 14 auf, so daß eine Stützringflächenpaarung 10, 14 gebildet ist, über die die beiden Teile 2 und 4 mittels der nachfolgend näher zu beschreibenden Spanneinrichtung gegeneinander preßbar sind.

Die zylindrische Ausnehmung 12 ist tiefer als die axiale Länge des Zentrierfortsatzes 6 ausgebildet. In den Grund dieser zylindrischen Ausnehmung ist ein Mitnehmerring 16 einpaßt und dort formschlüssig festgehalten. Zu diesem Zweck weist der Mitnehmerring 16 drei im Winkelabstand von jeweils 120° zueinander stehende konische Vertiefungen 18 auf, in die Kegelschrauben 20 drehbar sind, deren Haltekegel 22 an die Geometrie der konischen Vertiefungen 18 angepaßt ist. Die Kegelschrauben 20 sind in Gewindebohrungen 24 im ersten Teil 2 aufgenommen. Die Achsen 26 der Gewindebohrungen 24 sind zum Grund der zylindrischen Ausnehmung 12 hin bezüglich der nicht näher bezeichneten Achse der konischen Vertiefung 18 versetzt, so daß durch Eindrehen der Kegelschrauben 20, die bevorzugterweise mit einem Innensechskant versehen sind, ein axiales Anpressen des Mitnehmerrings 16 gegen eine Grund-Anlagefläche 28 erfolgt.

Auf der dem zweiten Teil 4 zugewandten Seite weist der Mitnehmerring 16 eine im wesentlichen zylindrische Innenausnehmung 30 auf, die auf der der Anlagefläche 28 zugewandten Seite in eine konische Innenstützfläche 32 übergeht. Mit dieser inneren Stützfläche 32 steht ein konvex gewölbter Auflageabschnitt 34 einer Zugstange 36 in Anlagekontakt. Die Außenoberfläche des Auflageabschnitts wird bevorzugterweise von der Oberfläche einer Kugelschicht gebildet, wodurch sich eine pendelnde Lagerung der Zugstange 36 relativ zum Mitnehmerring 16 ergibt. Die Weite der Innenausnehmung 30 ist dabei so gewählt, daß der Zugstange 36 eine ausreichende Pendelbewegung ermöglicht wird.

Die Zugstange 36 erstreckt sich mit ihrem Schaft in eine zur Schaftachse 8 konzentrische Ausnehmung 38 und bildet dort einen Spannkopf 40 aus, der einen Konusabschnitt 42 in Form einer Kegelstumpffläche aufweist. Im Bereich des Konusabschnitts 42 sind drei über den Umfang gleichmäßig verteilte Kegelschrauben 44, 46 und 48 vorgesehen, die in radialen Gewindebohrungen 50 des zweiten Schaftteils 4 aufgenommen sind und jeweils Spannkegelabschnitte 52 aufweisen, deren Neigung im wesentlichen der Neigung des Konusabschnitts 42 der Zugstange 36 entspricht. Bevorzugterweise liegen die nicht näher bezeichneten Achsen der Kegelschrauben 44, 46 und 48 in einer gemeinsamen Radialebene 54, so daß identisch geformte Spannkegelabschnitte 52 und identische Gewindebohrungen 50 für alle Kegelschrauben verwendet werden können. Man erkennt aus der Darstellung gemäß Figur 1, daß die Lage der Radialebene 54 derart an die Lage des Konusabschnitts 42 angepaßt ist, daß bei zentrischer Lage der Zugstange 36 durch Eindrehen einer oder mehrerer Kegelschrauben eine Zugkraft eingeleitet werden kann, die über den Kontakt zwischen der Innen ausnehmung 30 und dem im wesentlich sphärischen Auflageabschnitt 34 in eine Flächenpressung im Bereich der Stützringflächenpaarung 10, 14 umgewandelt wird. Dieser Kraftfluß entsteht in identischer Weise in drei Radialebenen die im gleichen Winkelabstand zueinander stehen, wodurch die Kupplung ein über den Umfang im wesentlichen gleichförmiges Widerstandsmoment gegen Biegung erhält.

Zur Bereitstellung einer torssionsfesten Verbindung zwischen den Schaftteilen 2 und 4 ist eine nachfolgend näher zu beschreibende Klauenverbindung vorgesehen. Zu diesem Zweck weist der Mitnehmerring 16 auf der der inneren Stützfläche 32 abgewandten Seite zwei diametral versetzte Klauenfortsätze 56 auf, die mit Passung in entsprechende nutenartige Ausnehmungen 58 im Zentrierfortsatz 6 eingreifen. Selbstverständlich sind die Abmessungen des Zentrierfortsatzes 6, der Tiefe der Ausnehmungen 58, der Höhe der Klauenfortsätze 56, der axialen Baulänge des Mitnehmerrings 16 und der Tiefe der zylindrischen Ausnehmung 12 aneinander so angepaßt, daß im geschlossenen Zustand der Kupplung ein axiales Spiel $S_A$ zwischen den Klauenfortsätzen 56 und dem Grund der Ausnehmungen 58, sowie ein axiales Spiel $S_B$ zwischen den Stirnflächen 60 und 62 des Zentrierfortsatzes 6 und des Mitnehmerrings 16 verbleibt.

Aus der Darstellung gemäß Figur 2 geht hervor, daß eine Axial-Symmetrieebene 64 der Klauenfortsätze 56 um den Winkel O von 30° zu einer weiteren Axialebene 66 versetzt ist, die durch die Mitte einer konischen Vertiefung 18 im Mitnehmerring 16 verläuft. Auf diese Weise ist es möglich, durch Verändern der Position des Mitnehmerrings 16 die Relativlage zwischen den Schaftteilen 2 und 4 in Schritten von 30° zu indexieren. Die Kupplung eignet sich damit in besonderem Maße für programmgesteuerte Werkzeugmaschinen, auch mit feststehenden Werkzeugen.

Die vorstehend beschriebene pendelnde Lagerung der Zugstange 36 sorgt nicht nur dafür, daß toleranzbedingte Fluchtungsungenauigkeiten der einzelnen Kupplungsteile ohne Einfluß auf querkraftfreie Zugkraftübertragung zwischen den Schaftteilen 2 und 4 haben können. Darüberhinaus eröffnet diese pendelnde Aufhängung die Möglichkeit, die Kupplung mit einer einzigen Stellbewegung zu lösen bzw. zu schließen. Zu diesem Zweck sind die Kegelschrauben 44 und 46 als voreinstellbare Stützschrauben und lediglich die Kegelschraube 48 als Stellschraube ausgebildet, die durch eine Innensechskantausnehmung 68 von Hand mittels Innensechskantschlüssel oder von einer automatisch arbeitenden Werkzeugwechseleinrichtung betätigbar ist. Die Stützschrauben 44 und 46 sind als Senkkopfschrauben ausgebildet, die im Fertigungsprozeß ein Mal im geschlossenen Zustand der Kupplung justiert und anschließend versiegelt werden. Durch Herausdrehen der Stellschraube 48, wie dies durch die strichpunktierte Linie in Figur 3 gezeigt ist, erhält die Zugstange 36 einen zusätzlichen Freiraum $R_F$, so daß sie aus dem Eingriff mit den beiden Stützschrauben 44 und 46 herausschwenken kann, woraufhin die beiden Schaftteile 2 und 4 auseinandergefahren werden können. Das vorstehend beschriebene Kupplungssystem ist so aufgebaut, daß es in jeden Bereich eines modernen Werkzeugsystems einer Werkzeugmaschine einsetzbar ist. Nachstehend werden einige vorteilhafte Möglichkeiten des Einsatzes dieses Kupplungssystems beschrieben.

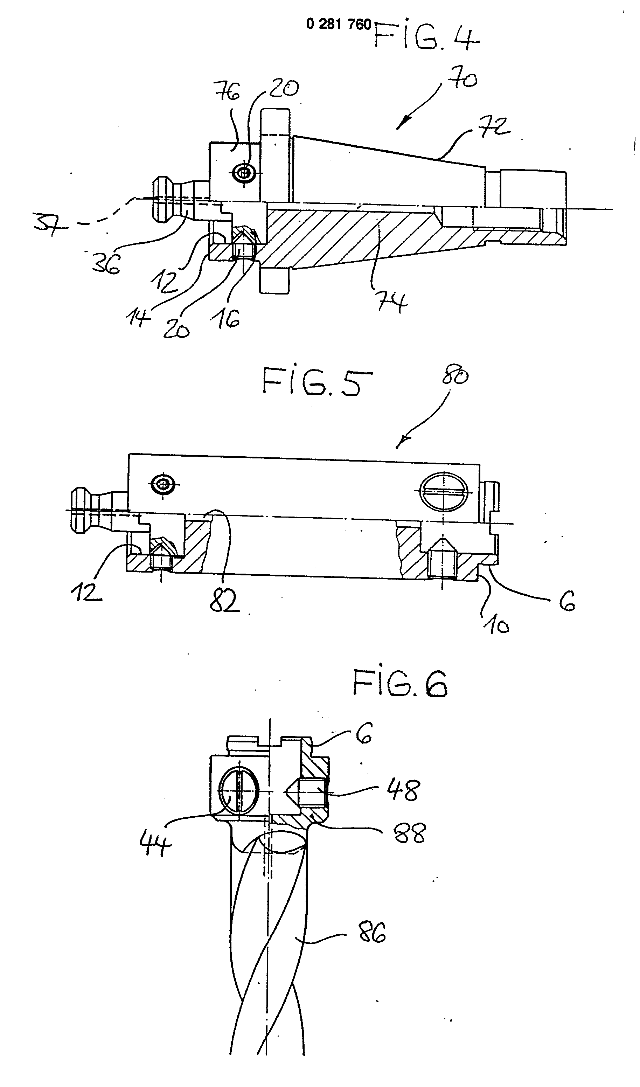

Figur 4 zeigt eine mit dem Bezugszeichen 70 allgemein bezeichnete Werkzeug-Grundaufnahme, die einen Spannkonus 72 zur Aufnahme in einer nicht gezeigten Werkzeugspindel aufweist. Diese Grundaufnahme 70 kann so gestaltet sein, daß sie sich für eine zentrale Kühlmittelzufuhr eignet. Zu diesem Zweck ist eine Innenbohrung 74 vorgesehen, über die Kühlmittel ins Zentrum des Schaftwerkzeugs eingeleitet werden kann. An der Grundaufnahme 70 ist ein Stützflansch 76 vorgesehen, der somit dem in Figur 1 mit dem Bezugszeichen 2 bezeichneten ersten Teil des Kupplungssystems entspricht. Im Stützflansch 76 befindet sich die zylindrische Ausnehmung 12 zur Aufnahme des Mitnehmerrings 16, der mittels dreier Kegelschrauben 20 dreh-und axialfest relativ zur Grundaufnahme 70 fixiert ist. Der Mitnehmerring 16 lagert wiederum pendelnd die Zugstange 36, die zur Ermöglichung der zentralen Kühlmittelzufuhr mit einer Innenbohrung 37 versehen ist.

Man erkennt aus der Darstellung gemäß Figur 4, daß durch die vorstehend beschriebene Gestaltung des Kupplungssystems eine verhältnismäßig große ringförmige Planabstützung über die Stützfläche 14 des Stützflansches 76 bereitgestellt wird, so daß auch bei sehr langen Werkzeugschäften eine hohe Rundlaufgenauigkeit und Bearbeitungspräzision sichergestellt ist.

An den Stützflansch 76 gemäß Figur 4 kann entweder direkt das Kupplungsgegenstück eines Werkzeugschaftes, oder aber eine Schaftverlängerung 80 gemäß Figur 5 gekoppelt werden. Auf der der Grundaufnahme zugewandten, d.h. gemäß Figur 5 rechten Seite, trägt die Schaftverlängerung den Zentrierfortsatz 6 und sie bildet die Gegen-Stützringfläche 10 für das sich an der rechten Seite anschließende Schaftteil aus. Eine Innenbohrung 82 ermöglicht wiederum die Führung von Schmier-oder Kühlmittel zur eigentlichen Werkzeugschneide.

Auf der anderen Seite der Schaftverlängerung 80 ist das Gegenstück zu den Kupplungsteilen der rechten Seite vorgesehen. Zur Verkürzung der Beschreibung soll dieser Abschnitt nicht näher beschrieben werden. Die Formgebung entspricht der Ausführung im Bereich des Stützflansches 76 der Figur 4.

Wie vorstehend bereits erwähnt, ist es auch möglich, an die Grundaufnahme gemäß Figur 4 das eigentliche Werkzeug direkt anzukoppeln. In Figur 6 ist diese Moglichkeit anhand eines Bohrer-Spiralteils 86 gezeigt, das mit einem Mitnehmer 88 verbunden ist. Bei dieser Ausführungsform ist der Mitnehmer an das vorstehend beschriebene Kupplungssystem angepaßt, d.h. er trägt die Stütz-und Stellschrauben 44 und 48 und bildet den Zentrierfortsatz 6 aus.

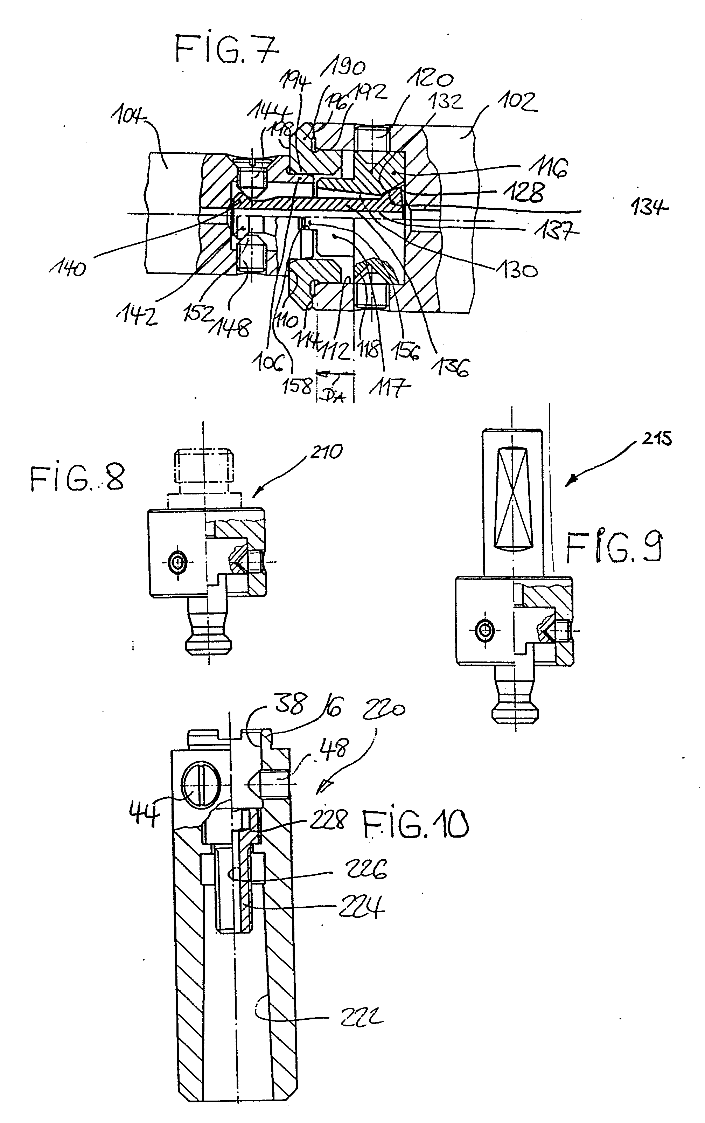

In Figur 7 ist eine Variante des vorstehend beschriebenen Kupplungssystems beschrieben, die dann Anwendung findet, wenn ein Übergang zwischen verschiedenen Schaftdurchmessern stattfindet. Zur Vereinfachung der Beschreibung werden diejenigen Teile dieser Ausführungsform, die den Kupplungsteilen der Figuren 1 bis 3 entsprechen, mit übereinstimmenden Bezugszeichen versehen, denen jedoch eine 1 bzw. eine 10 vorgestellt ist.

Mit dem Bezugszeichen 102 ist das erste Schaftteil und mit dem Bezugszeichen 104 das zweite Schaftteil bezeichnet, dessen Durchmesser um eine oder um mehrere Größen kleiner ist als der Durchmesser des ersten Schaftteils 102. Um auch für diesen Fall bei geringer Bauraumbeanspruchung das vorstehend beschriebene Kupplungssystem wirtschaftlich einsetzen zu können, werden die Geometrien der Endbereiche der zu koppelnden Teile 102, 104 unverändert belassen. D. h., es werden dieselben Kegelschrauben 120 im Bereich des Schaftteils 102 bzw. - mit dem entsprechend verkleinerten Maßen - die gleichen Kegelschrauben 144, 146, 148 im Bereich des zweiten Schaftteils 104 verwendet. Eine Anpassung erfährt das Kupplungssystem lediglich durch eine neue Gestaltung dreier Teile, nämlich des Mitnehmerrings 116, der Zugstange 136 und eines Zwischenrings 190.

Der Zwischenring hat zwei Zentrierabschnitte 192 und 194, von denen der eine in Passungseingriff mit der zylindrischen Ausnehmung 112 im ersten Schaftteil 102 und der andere in Passungseingriff mit einem Zentrierfortsatz 106 des zweiten Schaftteils 104 steht. Ferner weist der Zwischenring 190 zwei Planflächen 196 und 198 auf, die mit den ringförmigen Stützflächen 114 bzw. 110 der miteinander zu koppelnden Schaftteile 102 bzw. 104 zusammenwirken.

Der Mitnehmerring 116 entspricht in dem der Grund-Anlagefläche 128 zugewandten Bereich identisch dem Mitnehmerring 16 gemäß Figur 1. Abweichend vom Mitnehmerring 16 geht der Mitnehmerring 116 über eine Radialschulter in einen Reduzierfortsatz 117 über, dessen Länge an den Abstand $D_A$ zwischen den beiden Planflächen 196, 198 des Zwischenrings 190 angepaßt ist. An den Reduzierfortsatz 117 sind wiederum Klauenfortsätze 156 angeformt, die - wie vorstehend beschrieben - mit nutenartigen Ausnehmungen 158 im Zentrierfortsatz 106 in Passungseingriff stehen.

Ebenfalls um ein dem Abstand $D_A$ angepaßtes Maß ist die Zugstange 136 verlängert, die wiederum eine zentrische Ausnehmung 137 haben kann. Über den Spannkopf 140, der mit der inneren Stützfläche 132 in Anlagekontakt steht, und den Konusabschnitt 142 erfolgt wiederum ein axiales Unterzugsetzen und damit ein axiales Zusammenpressen der zu koppelnden Teile 102 und 104, wobei durch die vorgesehene Lagerung der Zugstange 136 keine Querkräfte auf die Schaftteile 102 und 104 eingeleitet werden können.

Zur Erleichterung der Pendelbewegung der Zugstange 136 weist der Mitnehmerring 116 eine sich konisch zum zweiten Schaftteil 104 hin erweiternde Innenausnehmung 130 auf, so daß nach dem Lösen der Stellschrauben 148 ein Herauspendeln des Spannkopfs 140 aus dem Eingriff mit den Stützschrauben 144 (146) erfolgen kann.

Aus der vorstehenden Beschreibung wird klar, daß eine mehrstufige Reduzierung des Schaftdurchmessers nicht mehr axialen Bauraum benötigt, als eine einstufige Reduzierung. Ferner wird klar, daß für eine derartige Reduzierung lediglich drei Einzelteile, nämlich der Mitnehmerring 116, der Zwischenring 190 und die Zugstange 136 ausgewechselt werden müssen, wodurch die Wirtschaftlichkeit der Anwendung des Kupplungssystem zusätzlich verbessert und das Anwendungspektrum erweitert wird.

Ansonsten gelten die im Zusammenhang mit der Ausführungsform gemäß Figur 1 bis 3 beschriebenen Vorteile auch für diese Ausführungsform. Die Indexierung und Torssionssicherung über die beiden, um 180° versetzten Klauenfortsätze eröffnet insbesondere in Verbindung mit dem dreifach einstellbaren Mitnehmerring 116 weiterhin die Möglichkeit, eine Lageindexierung der beiden Teile 102 und 104 in Winkelstufen von 30° vorzunehmen.

In den Figuren 8 und 9 sind weitere Möglichkeiten gezeigt, wie das Kupplungssystem mit einem modernen Werkzeugsystem verbunden werden kann. In diesen Fällen ist der in Figur 1 auf der rechten Seite gezeigte Kupplungsbestandteil an Adaptern 210 bzw. 215 ausgebildet, mit denen ein Anschluß an andere Werkzeugspannsysteme erfolgen kann.

Figur 10 zeigt in einer der Figur 6 ähnlichen Darstellung eine weitere Möglichkeit, wie das Kupplungssystem in ein modernes Werkzeugsystem eingegliedert werden kann. In diesem Fall ist der in Figur 1 auf der linken Seite gezeigte Kupplungsbereich an einer Werkzeugaufnahme 220 ausgebildet, die einen Innenkonus 222 zur Aufnahme eines Werkzeugs aufweist, das mittels einer axialen Sicherungsschrauben 224 mit zentraler Kühlbohrung 226 gespannt wird. Durch die zentrale Bohrung 37 bzw. 137 in der Zugstange 36 bzw. 136 kann die Versorgung der zentralen Kühlbohrung 226 mit Kühl-bzw. Schmiermittel ungestört erfolgen. Im gelösten Zustand der Kupplung ist ein Kopf 228 der Sicherungsschraube 224 von der Ausnehmung 38 her frei zugänglich. Hinsichtlich der Lage des Schraubenkopfs 228 besteht die einzige einzuhaltende Bedingung darin, daß er unterhalb des Spannkopfs der in Figur 10 nicht näher dargestellten Zugstange liegen muß.

Aus der vorstehenden Beschreibung wird klar, daß das beschriebene Kupplungssystem dazu herangezogen werden kann, die verschiedensten Werkzeugteile eines Werkzeugsystems miteinander zu kombinieren, wobei durchwegs das gleiche Kupplungsprinzip unter Beibehaltung der Zentrier-und Stelleinrichtungen Anwendung finden kann. Dabei ist das Kupplungssystem so aufgebaut, daß der Zentrierfortsatz an demjenigen Werkzeugteil vorgesehen wird, das der Werkzeugschneide näherliegt.

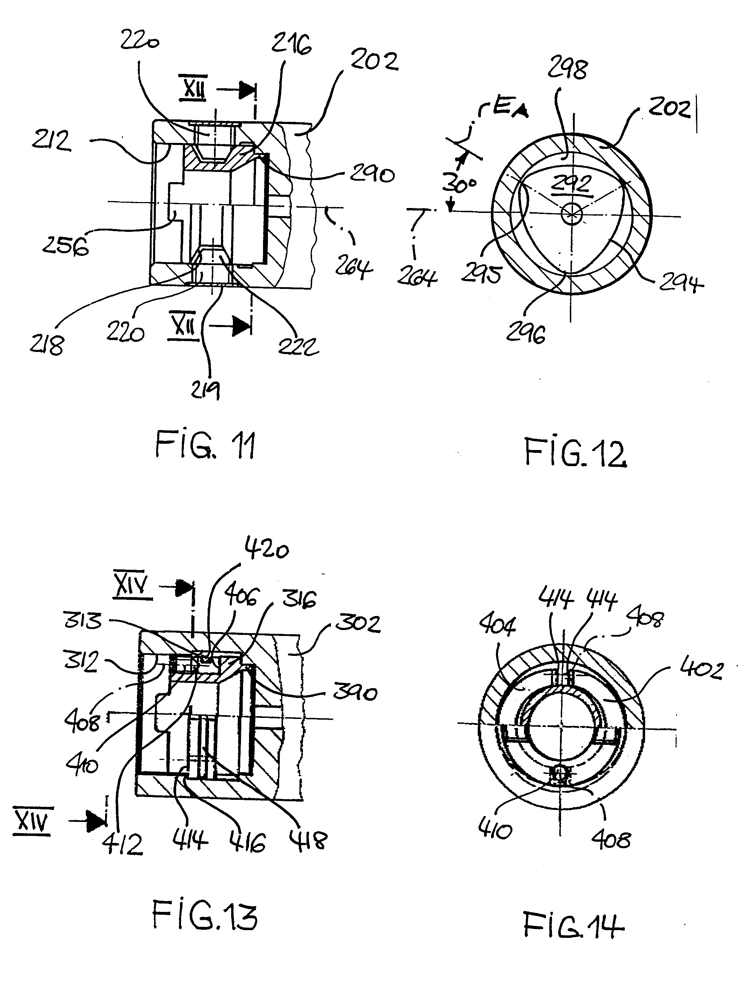

In den Figuren 11 und 12 ist eine weitere Variante des Kupplungssystems gezeigt. Da sich die Abwandlung dieses Ausführungsbeispiels gegenüber den beschriebenen Systemen auf eines der zu koppelnden Teil beschränkt, ist lediglich dieses Teil zeichnerisch dargestellt. Das Schaftteil 202 ist wiederum zur Aufnahme eines Mitnehmerrings 216 gestaltet, der jedoch abweichend vom zuvor beschriebenen Ausführungsbeispiel auf der den Klauenfortsätzen 256 abgewandten Seite einen Mitnahmefortsatz 290 für den formschlüssigen Eingriff in eine entsprechend gestaltete Vertiefung 292 in der zylinderischen Ausnehmung 212 aufweist. Dieser Mitnahmefortsatz 290 hat im wesentlichen die Form eines Hohl prismas mit vorzugsweise konvex gewölbten Außenflächen 294, wobei die Kanten 296 des Mitnahmefortsatzes 290 abgerundet sind. Mit 298 ist eine Radialschulter bezeichnet, gegen die der Mitnehmerring 216 preßbar ist. Zu diesem Zweck sind mehrere über den Umfang gleichmäßig verteilte Befestigungsschrauben 220 vorgesehen, die im Bereich ihrer Spitze Konusflächen 222 für den Eingriff in eine V-förmige Nut 218 ausbilden. Die Befestigungsschrauben 220 sind mittels einer Abdeckkappe 219 abgedeckt.

Man erkennt aus der Darstellung, daß die Symmetrieebene 264 der Klauenfortsätze 256 mit der durch einen Scheitel des Mitnahmefortsatzes 290 verlaufenden Axialebene $E_A$ einen Winkel von 30° einschließt, wodurch eine Indexierung des an das Teil 202 anzukoppelnden Teils in Winkelschritten von 30° möglich wird.

Eine weitere Ausführungsform des Kupplungssystems ist in den Figuren 13 bis 14 gezeigt. Diese Ausführungsform unterscheidet sich von der in den Figuren 11 und 12 gezeigten Variante hinsichtlich der Lagefixierung des Mitnehmerrings, der in der Ausführungsform gemäß Figur 13 und 14 mit 316 bezeichnet ist. Das Schaftteil 302 hat wiederum eine Aufnahme 312 für den Mitnehmerring 316, der - wie bei der Ausführungsform gemäß Figur 11 und 12 - mit einem Mitnahmefortsatz 390 ausgestattet ist. Hinsichtlich des Mitnahmefortsatzes 390 unterscheidet sich die Ausführungsform gemäß Figur 13 und 14 nicht von derjenigen gemäß Figur 11 und 12, so daß eine nähere Beschreibung entfallen kann. Zur Lagefixierung des Mitnehmerrings 316 im Schaftteil 302 ist eine geteilter Haltering vorgesehen, der zwei Halteringsegmente 402 und 404 aufweist. Diese Halteringsegmente sind in einer Rechtecknut 406 des Mitnehmerrings 316 mit Passung aufgenommen. Für die Halteringsegmente ist in der zylindrischen Ausnehmung 312 ein Einstich 313 vor gesehen, in den die Halteringsegmente 402 und 404 hineinbewegbar sind. Zu diesem Zweck weist der Mitnehmerring 316 zwei diametral zueinander versetzte Gewindeborhrungen 408 auf, in die axial ausgerichtete Fixierschrauben 410 - schraubbar sind, die eine konische Spitze 412 aufweisen. Die konischen Spitzen 412 wirken mit Keilflächen 414 der Halteringsegmente 402 und 404 zusammen, so daß beim Eindrehen der Fixierschrauben 410 ein Auseinanderbewegen der Halteringsegmente 402 und 404 in den Einstich 313 hinein erfolgt. Auf diese Weise wird der Mitnehmerring 316 axial unverrückbar im Teil 302 festgehalten.

Um beim Nachaußendrücken der Halteringsegmente 402 und 404 zusätzlich eine axiale Verspannung des Mitnehmerrings 316 bewirken zu können, kann vorgesehen sein, die der Fixierschraube 410 zugewandte Paßfläche 416 des Einstichs 313 an diesen Konus anzupassen, so daß beim Auseinanderspreizen eine flächige Anlage der beiden Konusflächen aneinander stattfindet und dadurch ein Anpressen des Mitnehmerrings 316 gegen den Grund der Ausnehmung 312 erfolgt.

Um sicherzustellen, daß der Mitnehmerring 316 zusammen mit den Halteringsegmenten 402 und 404 im gelösten Zustand der Fixierschrauben 410 problemlos aus der Ausnehmung 312 herausgezogen werden kann, ist auf der zylindrischen Außenoberfläche der Halteringsegmente 402 und 404 eine Ringnut 418 ausgebildet, in der ein elastischer Ring 420 aufgenommen ist, der die Halteringsegmente 402 und 404 radial nach innen in Anlage an den Grund der Ringnut 406 hält. In diesem Zustand stehen die Halteringsegmente 402 und 404 nicht über den Innendurchmesser der zylindrischen Ausnehmung 312 vor.

Abweichend vom dargestellten Ausführungsbeispiel ist es auch möglich, die Anzahl der Halteringsegmente zu erhöhen und eine dementsprechende Zahl von Fixierschrauben vorzusehen.

Die Erfindung schafft somit ein Kupplungssystem für spanabhebende Schaftwerkzeuge, mit dem eine in Dreh-und Axialrichtung feste Verbindung zwischen koaxialen Teilen des Schaftwerkzeugs herstellbar ist. Das Kupplungssystem weist eine in einem ersten Teil ausgebildete Aufnahme für einem am anzuschließenden zweiten Teil vorgesehenen Zentrierfortsatz, eine Mitnehmereinrichtung und eine von außen mittels einer Stelleinrichtung betätigbare Spanneinrichtung auf, mit der die beiden Teile über eine Stützringflächenpaarung gegeneinander preßbar sind. Die Spanneinrichtung weist eine pendelnd im ersten Teil achsmittig gelagerte Zugstange auf, die sich in eine koaxiale Ausnehmung des zweiten Teils erstreckt und dort einen Konusabschnitt ausbildet, über den die Zugstange mittels der sich am zweiten Teil abstützenden Stelleinrichtung unter Zug setzbar ist. Hierdurch wird ein reiner Axialzug erzeugt, der über eine große, ringförmige Planabstützung querkraftfrei in die zu koppelnden Schaftteile einleitbar ist.

## Ansprüche

1. Kupplungssystem für spanabhebende Schaftwerkzeuge, mit dem eine in Dreh-und Axialrichtung feste Verbindung zwischen koaxialen Teilen des Schaftwerkzeugs herstellbar ist, mit einer in einem ersten Teil ausgebildeten Aufnahme für einen am anzuschließenden zweiten Teil vorgesehenen Zentrierfortsatz, einer Mitnehmereinrichtung, und einer von außen mittels einer Stelleinrichtung betätigbaren Spanneinrichtung, mit der die beiden Teile über eine Stützringflächenpaarung gegeneinander preßbar sind, dadurch gekennzeichnet, daß die Spanneinrichtung eine pendelnd im ersten Teile (2; 102) achsmittig gelagerte Zugstange (36; 136) aufweist, die sich in eine koaxiale Ausnehmung (38) des zweiten Teils (4; 104) erstreckt und dort einen Konusabschnitt (42; 142) ausbildet, über den die Zugstange mittels der sich am zweiten Teil (4; 104) abstützenden Stelleinrichtung (44, 46, 48; 144, 148) unter Zug setzbar ist.

2. Kupplungssystem nach Anspruch 1, dadurch gekennzeichnet, daß die Stelleinrichtung eine Stellschraube (48; 148) aufweist, die im wesentlic:hen in radialer Richtung in das zweite Teil (4; 104) - schraubbar ist und eine an den Konusabschnitt (42; 142) der Zugstange (36; 136) angepaßte Stellfläche (52; 152) hat.

3. Kupplungssystem nach Anspruch 2, dadurch gekennzeichnet, daß die Zugstange (36; 136) von der Stellschraube (48; 148) gegen zwei weitere an den Konusabschnitt (42; 142) angepaßte Stützflächen (52) von im Winkelabstand zueinander stehenden Stützkörpern (44, 46; 144) preßbar ist.

4. Kupplungssystem nach Anspruch 3, dadurch gekennzeichnet, daß die Stützkörper (44, 46; 144) von einstellbaren Schrauben gebildet sind, die vorzugsweise in derselben Radialebene (54) wie die Stellschraube (48; 148) angeordnet sind.

5. Kupplungssystem nach Anspruch 4, dadurch gekennzeichnet, daß die Stellschraube (48; 148) und die Stützschrauben (44, 46; 144) in gleichem Winkelabstand zueinander stehen.

6. Kupplungssystem nach Anspruch 4 oder 5, dadurch gekennzeichnet, daß die Stützschrauben (44, 46; 144) nach dem Einstellvorgang versiegelbar sind.

7. Kupplungssystem nach einem der Ansprüche 1 bis 6, dadurch gekennzeichnet, daß die pendelnd gelagerte Zugstange (36; 136) von einem Mitnehmerring (16; 116; 216; 316) getragen ist, der in der Aufnahme (12; 112; 212; 312) des ersten Teils (2; 102) montiert ist und auf der dem zweiten Teil (4; 104) zugewandten Seite Klauenfortsätze (56; 156; 256) für den Passungseingriff in entsprechende Ausnehmungen (58; 158) im Zentrierfortsatz (6; 106) des zweiten Teils (4; 104) hat.

8. Kupplungssystem nach Anspruch 7, dadurch gekennzeichnet, daß zwei diametral versetzte Klauenfortsätze (56; 156; 256) ausgebildet sind.

9. Kupplungssystem nach Anspruch 7 oder 8, dadurch gekennzeichnet, daß der Mitnehmerring (16; 116; 216; 316) lösbar in der Aufnahme (12; 112) befestigt ist.

10. Kupplungssystem nach Anspruch 9, dadurch gekennzeichnet, daß in einer Außenumfangsfläche des Mitnehmerrings (16; 116) drei im Winkelabstand von 120° zueinander angeordnete konische Ausnehmungen (18; 118) ausgebildet sind, in die Befestigungsschrauben (20; 120) drehbar sind.

11. Kupplungssystem nach Anspruch 10, dadurch gekennzeichnet, daß der Mitnehmerring (16; 116) von den Befestigungsschrauben (20; 120) gegen eine Auflagefläche (28; 128) im Grund der Aufnahme (12; 112) drückbar ist.

12. Kupplungssystem nach Anspruch 10 oder 11, dadurch gekennzeichnet, daß die durch das Zentrum und durch eine konische Ausnehmung (18; 118) verlaufende Axialebene (66) mit der Symmetrieebene (64) der Klauenfortsätze (56; 156) einen Winkel ($\theta$) von 30° einschließt.

13. Kupplungssystem nach Anspruch 9, dadurch gekennzeichnet, daß der Mitnehmerring (216; 316) auf der den Klauenfortsätzen (256) abgewandten Seite einen radial abgesetzten Mitnahmefortsatz (290; 390) für den formschlüssigen Eingriff in eine entsprechend gestaltete Vertiefung (292) in der zylindrischen Ausnehmung (212; 312) aufweist.

14. Kupplungssystem nach Anspruch 13, dadurch gekennzeichnet, daß der Mitnahmefortsatz (290) im wesentlichen die Form eines Hohlprismas mit vorzugsweise konvex gewölbten Außenflächen (294) hat.

15. Kupplungssystem nach Anspruch 14, dadurch gekennzeichnet, daß die Kanten (296) des Mitnahmefortsatzes (290) abgerundet sind.

16. Kupplungssystem nach Anspruch 14 oder 15, dadurch gekennzeichnet, daß der Mitnahmefortsatz (290) einen einem Polygonquerschnitt angenäherten Querschnitt hat, wobei die Zahl der Ecken (296) durch drei teilbar ist.

17. Kupplungssystem nach einem der Ansprüche 14 bis 16, dadurch gekennzeichnet, daß die durch das Zentrum und durch einen Scheitelpunkt (295) des Mitnahmefortsatzes (290) verlaufende Axialebene ($E_A$) mit der Symmetrieebene (264) der Klauenfortsätze (256) einen Winkel ($\theta$) von 30° einschließt.

18. Kupplungssystem nach einem der Ansprüche 13 bis 17, dadurch gekennzeichnet, daß der Mitnehmerring (216) auf seiner Außenmantelfläche eine V-förmige Ringnut (218) für den Eingriff mehrerer über den Umfang gleichmäßig verteilter Befestigungsschrauben (220) mit einer Konusfläche (222) im Bereich der Spitze aufweist.

19. Kupplungssystem nach einem der Ansprüche 13 bis 17, dadurch gekennzeichnet, daß der Mitnehmerring (316) auf seiner Außenmantelfläche eine Rechtecknut (406) für die Aufnahme eines geteilten Halterings (402, 404) aufweist, für den in der zylindrischen Ausnehmung (312) ein entsprechender Einstich (313) vorgesehen ist, in den hinein die Ringsegmente (402, 404) mittels zumindest einer Fixierschraube (410) spreizbar sind.

20. Kupplungssystem nach Anspruch 19, dadurch gekennzeichnet, daß der Haltering (402, 404) stirnseitige Paßflächen hat, von denen sich die eine flächig an der dem Klauenfortsatz abgewandten Schulter der Rechtecknut (406) und die andere im aufgepreizten Zustand des Halterings an einer Stufenfläche (416) des Einstichs (313) abstützt.

21. Kupplungssystem nach Anspruch 19 oder 20, dadurch gekennzeichnet, daß die Halteringsegmente (402, 404) mittels zumindest einer Spreizschraube (410) auseinanderspreizbar sind, die im wesentlichen axial in den Mitnehmerring (316) - schraubbar und mit ihrer kegelförmig gestalteten Spitze (412) gegen keilförmig zueinander angestellte Stützflächen (414) benachbarter Halteringsegmente (402, 404) drückbar sind.

22. Kupplungssystem nach einem der Ansprüche 19 bis 21, dadurch gekennzeichnet, daß die Halteringsegmente (402, 404) auf ihrer Außenumfangsfläche eine Ringnut (418) für einen elastischen Spannring (420) aufweisen.

23. Kupplungssystem nach einem der Ansprüche 7 bis 22, dadurch gekennzeichnet, daß der Mitnehmerring (16; 116; 216; 316) eine konische innere Stützfläche (32; 132) hat, mit der ein konvex gewölbter Auflageabschnitt (34; 134) der Zugstange (36; 136) in Anlagekontakt steht.

24. Kupplungssystem nach einem der Ansprüche 7 bis 23, dadurch gekennzeichnet, daß das zweite Teil (104) über einen Zwischenring (190) relativ zum ersten Teil (102) zentriert und gegen diese spannbar ist.

25. Kupplungssystem nach Anspruch 24, dadurch gekennzeichnet, daß der Zwischenring (190) mit einem Zentrierabschnitt (192) in Passungseingriff mit einer Zentrierausnehmung (112) des ersten Teils (102) steht und selbst eine Zentrier-Innenfläche (194) für den Zentrierfortsatz (106) des zweiten Teils (104) hat.

26. Kupplungssystem nach Anspruch 25, dadurch gekennzeichnet, daß der Mitnehmerring (116) über eine Radialschulter in einen Reduzierfortsatz (117) übergeht, der vorzugsweise radial innerhalb des Zwischenrings (190) liegt.

27. Kupplungssystem nach einem der Ansprüche 1 bis 26, dadurch gekennzeichnet, daß die Zugstange (36; 136) eine durchgehende Innenbohrung (37; 137) hat.

28. Kupplungssystem nach einem der Ansprüche 1 bis 27, dadurch gekennzeichnet, daß das erste Teil (2; 102) Bestandteil eine Werkzeug-Grundaufnahme (70) für den Anschluß an eine Maschinenspindel ist.

29. Kupplungssystem nach einem der Ansprüche 1 bis 27, dadurch gekennzeichnet, daß das erste Teil (2; 102) Bestandteil einer Schaftverlangerung (80) ist, die an ihrem einen, dem Schnittwerkzeug zugewandten Ende die Aufnahme (12) und an ihrem anderen Ende einen Zentrierfortsatz (6) für eine weitere Kupplung ausbildet.

30. Kupplungssystem nach einem der Ansprüche 1 bis 27, dadurch gekennzeichnet, daß das erste Teil (2; 102) Bestandteil eines Adapters (210; 215) für eine Werkzeug-Grundaufnahme ist.

31. Kupplungssystem nach einem der Ansprüche 1 bis 30, dadurch gekennzeichnet, daß das zweite Teil (4; 104) Bestandteil eines Bohrerschafts ist.

32. Kupplungssystem nach einem der Ansprüche 1 bis 30, dadurch gekennzeichnet, daß das zweite Teil (4; 104) Bestandteil eines Mitnehmers (88) für ein Bohrer-spiralteil (86) ist.

33. Kupplungssystem nach einem der Ansprüche 1 bis 30, dadurch gekennzeichnet, daß das zweite Teil (4; 104) Bestandteil einer Werkzeugaufnahme (220) ist.

34. Kupplungssystem nach Anspruch 33, dadurch gekennzeichnet, daß die Werkzeugaufnahme (220) einen Innenkonus (222) hat, in den eine Spannschraube (224) ragt, die sich mit ihrem Kopf (228) an einer unterhalb der Stelleinrichtung (44, 48) ausgebildeten Schulter abstützt.

35. Kupplungssystem nach Anspruch 34, dadurch gekennzeichnet, daß die Spannschraube (224) eine durchgehende Innenausnehmung (226) hat.

# FIG.1

# FIG.2

# FIG.3

0 281 760

FIG. 4

FIG. 5

FIG. 6

0 281 760

FIG.7

FIG.8

FIG.9

FIG.10

FIG. 11

FIG. 12

FIG. 13

FIG. 14